# EUROPÄISCHE PATENTSCHRIFT

(11) **EP 1 674 819 B1**
(45) Veröffentlichungstag und Bekanntmachung des Hinweises auf die Patenterteilung: **26.03.2008**
(21) Anmeldenummer: 05026655.0
(22) Anmeldetag: 07.12.2005
(51) Int. Cl.: F42B 15/00, B64C 39/02, B64C 27/26, B64C 27/28

(54) **Drohne**
Drone
Drone

(30) Priorität: 23.12.2004 DE 102004061977
(43) Veröffentlichungstag der Anmeldung: 28.06.2006
(73) Patentinhaber: LFK-Lenkflugkörpersysteme GmbH, 86529 Schrobenhausen (DE)
(72) Erfinder: Gleich, Peter, 93326 Abensberg (DE); Maier, Franz, 83075 Bad Feilnbach (DE)
(74) Vertreter: Hummel, Adam

(56) Entgegenhaltungen:
- EP-A- 0 283 094
- WO-A-98/32656
- DE-A1- 2 904 749
- DE-A1- 19 540 272
- US-A- 6 119 976
- US-B1- 6 260 797

## Beschreibung

Die Erfindung betrifft einen Kleinflugkörper mit Auftriebs- und Steuerelementen sowie Mitteln zu seinem Antrieb.

Als ergänzende Bewaffnung für Infanteristen, aber auch für Grenzschutz, Anti-Terror Einheiten etc. ist ein Kleinflugkörper wünschenswert, mit dem z. B. Heckenschützen, Geiselnehmer, Terroristen etc. aber auch andere Ziele in unübersichtlichem bzw. urbanem Gelände und innerhalb von Gebäudestrukturen aufgeklärt und aktiv bekämpft werden können.

Zur Gefechtesfeldaufklärung ist gemäß US 6,119,976 eine für den Infanterieeinsatz geeignete Beobachtungsdrohne bekannt, die aus einem geschulterten Abschussbehälter pneumatisch, hydraulisch oder pyrotechnisch von einem Infanteristen gestartet werden kann und nach dem Start mittels eines ausfaltbaren, aerodynamischen Auftrieb erzeugenden Delta-Flügels propellergetrieben die gewünschte Gefechtsfeldaufklärung durchführt, in dem über eine mitgeführte Fernsehkamera und eine Signalverbindung zum Startort Bilder des Gefechtsfeldes auf ein am Startort befindliches Leitgerät übertragen werden. Über dieses Leitgerät oder mittels eines Autopiloten kann die Beobachtungsdrohne nach dem Start über das aufzuklärende Gefechtsfeld und zum Startort zurück geführt werden. Der ebenfalls faltbare am Bug des Rumpfes der Aufklärungsdrohne gelagerte Propeller ist von einem batteriegespeisten Elektromotor angetrieben.

Eine solche, eine Aufklärungsreichweite von etwa 10 km aufweisende Drohne ist aufwendig und erfordert infolge des verwendeten aerodynamischen Auftrieb erzeugenden Delta-Flügels besondere konstruktive Maßnahmen zu deren Flugstabilisierung. Auch bedarf es besonderer Kenntnisse und Übung für die Bedienung einer solcher Aufklärungsdrohne. Darüber hinaus ist diese infolge ihrer durch den Delta-Flügel bestimmte Flugeigenschaften besonders leicht Abwehrmaßnahmen ausgesetzt.

Es ist ferner bekannt, solche Drohnen mit üblichen faltbaren Trag- und Steuerflächen auszustatten, aus fahrzeuggetragenen Abschussbehältern zu starten und über eine bordseitige Lenkelektronik in ein Zielgebiet zu führen, so dass diese zur Bekämpfung von Bodenzielen verwendet werden können; vgl. DE 29 04 749.

Hierzu sind, sobald die Drohne ihr Zielgebiet erreicht hat, Trag- und Steuerflächen sowie der Propellerantrieb abwerfbar ausgebildet, so dass die Drohne nunmehr von einem Suchkopf gesteuert im Sturzflug in das Ziel selbsttätig geführt werden kann.

Ein solches Waffensystem ist als ergänzende Bewaffnung für einen Infanteristen ungeeignet.

Schließlich zeigt die US 6,260,797 einen aus einem Abschussbehälter insbesondere aus einem Kanonenrohr verschießbaren Flugkörper, der mit nach dem Abschuss entfaltbaren Flügeln und einem Propellerantrieb versehen ist, um aus der ballistischen Anfangsflugbahn über eine Transitionsflugphase in eine aerodynamische Marschflugbahn überführt werden zu können, zwecks Vergrößerung der Reichweite des eine oder mehrere Gefechtsladungen tragenden Flugkörpers.

Die Transitionsphase beginnt bei signifikanter Verlangsamung der ballistischen Flugphase und erfordert einen ausstossbaren, die Sinkgeschwindigkeit des Flugkörpers mindernden Fallschirm. Bei Erreichen des Zielgebietes werden Tragflächen, Fallschirm und Propeller abgeworfen, um die ursprünglichen ballistischen Eigenschaften des Flugkörpers wieder herzustellen zwecks seiner Überführung in das Ziel.

Diese bekannten Flugkörper oder Drohnen sind infolge ihrer Größe und ihres Aufwandes als ergänzende Bewaffnung für Infanteristen nicht geeignet. Auch kann mit diesen kein für bestimmte Zielbekämpfungen ausreichen der Schnellflug und keine schnellen Geschwindigkeitsänderungen mit einfachen für die Handhabung durch einen Infanteristen geeigneten Mitteln erreicht werden.

Es ist das Ziel der Erfindung, einen Kleinflugkörper zu schaffen, mit dem die genannten Aufgaben ohne die Nachteile der bekannten Lösungen durchgeführt werden können.

Diese Aufgabe wird gemäß der Erfindung durch die Merkmale des Patentanspruches 1 erreicht. Weitere Merkmale der Erfindung ergeben sich aus den Unteransprüchen.

In der nachfolgenden Beschreibung sind anhand der Zeichnung verschiedene Ausführungsbeispiele der Erfindung beschrieben.

Es zeigen:
- Fig. 1a und 1b: eine erste Ausführungsform eines erfindungsgemäßen Kleinflugkörpers in betriebsbereitem und zusammengeklappten Zustand,
- Fig. 2a und 2b: eine zweite Ausführungsform eines erfindungsgemäßen Kleinflugkörpers in betriebsbereitem und zusammengeklappten Zustand und
- Fig. 3a und 3b: eine dritte Ausführungsform eines erfindungsgemäßen Kleinflugkörpers in betriebsbereitem und zusammengeklappten Zustand.

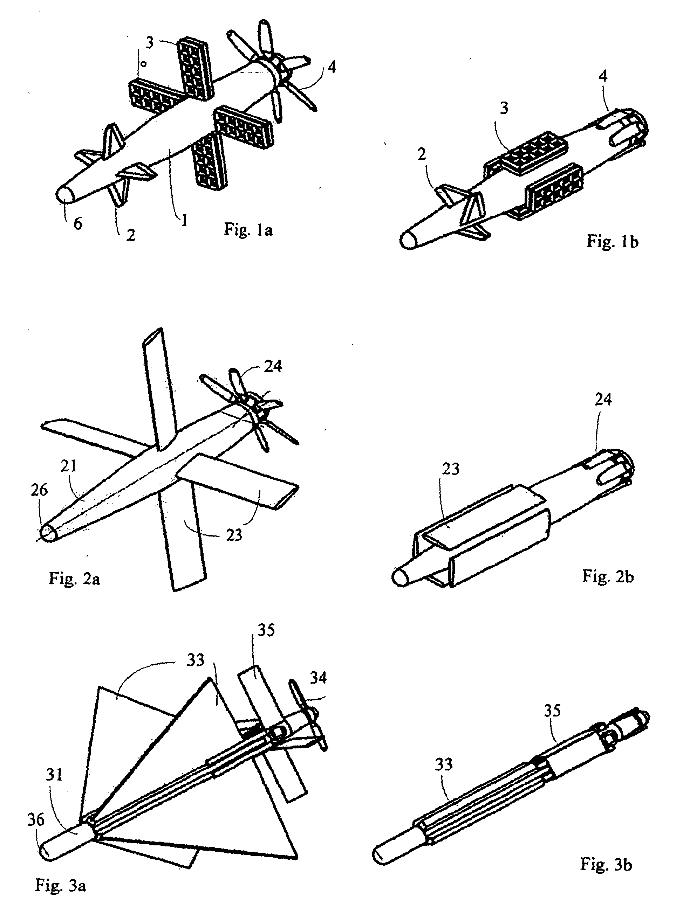

Die Figuren 1a und 1b zeigen eine erste Ausführungsform eines erfindungsgemäßen Kleinflugkörpers in betriebsbereitem und zusammengeklappten Zustand. Dabei ist mit 1 der Rumpf (Airframe) bezeichnet, in dessen Inneren u.a. die Navigations-, Lenk- und Regelelektronik sowie ein modularer Gefechtskopf enthalten sind. Am vorderen Ende ist der Flugkörper mit einer kardanisch steuerbaren Kamera 6 ausgestattet, deren Bilder per Datenübertragung an den Operator übermittelbar sind.

Des weiteren sind am Rumpf ausklappbare Entenruder 2 zur Lagesteuerung und ausklappbare Gitterflügel 3 zur aerodynamischen Flugstabilisierung angebracht. Am hinteren Ende enthält der Flugkörper einen Elektroantrieb 4 mit Faltpropellern.

Die Figuren 2 und 2a zeigen eine weitere Ausführungsform. Hier sind die ebenfalls ausklappbaren Flügel 23 mittels im Flugkörper 21 angeordneter Rudermaschinen zur Steuerung der Rollage und des Rollmoments drehbar gelagert. Der Antriebsmotor 24 für die Faltpropeller ist hier am Rumpf kardanisch gelagert. Am vorderen Ende ist wieder eine Kamera 26 angeordnet.

Figur 3 und 3 a zeigen ein weiteres Ausführungsbeispiel. Die Faltflügel 33 sind fest am Rumpf angeordnet; zur Lagesteuerung dient ein ausklappbares kartesisches Heckleitwerk 35. Am Rumpfende dient wiederum ein Motor mit Faltpropeller 34 zum Antrieb.

Der Kleinflugkörper besitzt also in jeder Ausführungsform einen Airframe (Rumpf), in den frontseitig eine richtbare Mini-TV-Kamera integriert ist. Im Anschluss daran befinden sich die Komponenten Mini-Wirkladung, Datenübertragungselektronik, Lenk-/und Regelelektronik, Funkempfänger und Energieversorgung. Im Heck des Kleinflugkörpers sitzt der Elektro-Antriebsmotor, der im Normal-Vorwärtsflug einen handelsüblichen faltbaren Druck-Propeller antreibt.

Der Elektromotor kann während des Fluges in seiner Drehrichtung umgesteuert werden, so dass der Propeller in diesem Fall den Kleinflugkörper zunächst abbremst und dann in einen Schwebeflugzustand bringen kann bei dem der Kleinflugkörper mit der Kamera nach unten "am Propeller hängt" und kontrollierte Seiten- und Höhenänderungen durchführen kann.

Außen am Airframe sind 4 kartesisch angeordnete Klapp-/oder Faltflügel angebracht, die im eingeklappten/eingefalteten Zustand die Unterbringung des Kleinflugkörpers in einem Transport-/und Startbehälter gestatten.

Die Flügel können als Planarflügel wie in Figur 2 und 3 oder als sogenannte Gitterflügel wie in Fig. 1 dargestellt ausgeführt werden. Statt der kartesischen Flügel-/Ruderanordnung kann auch eine Anordnung mit jeweils drei Auftriebs- bzw. Steuerelementen gewählt werden.

Zur Steuerung des Kleinflugkörpers werden bei den Ausführungsbeispielen nach Fig. 1 bzw. 3 vier kartesisch angeordnete Aerodynamikruder verwendet, die front- oder heckseitig angeordnet sind. Die Ruder werden jeweils von einer elektrischen Rudermaschine angetrieben. Die vier Rudermaschinen können wie bei klassischen Flugkörperkonzepten voneinander unabhängig angesteuert werden. Die Ruderausschläge für Rollen, Nicken, Gieren werden durch entsprechendes Überlagern der vier Einzelruderausschläge erzeugt.

Die Ruder sind im Transportzustand im Startbehälter ebenso wie die Flügel angeklappt und werden etwa zeitgleich mit der Flügelentfaltung ausgeklappt.

Der Kleinflugkörper wird mittels Funkfernsteuerung vom Operateur (Soldat) gelenkt, wobei die automatische Lage- bzw. Drehratenstabilisierung des Kleinflugkörper durch 3-achsige Miniaturkreisel erfolgt. Dadurch wird die Lenkung und Steuerung des Kleinflugkörper stark vereinfacht.

Im Vorwärtsflug wird der Kleinflugkörper wie ein klassischer kartesischer Flugkörper gesteuert. Im Schwebeflug wird die Seitenbewegung in y- und z-Richtung des FK-festen Achsensystems über ein anderes System der Ruderwinkelzuordnung kontrolliert als beim Vorwärtsflug.

Beim Übergang aus einem Flugzustand in den anderen (Vorwärtsflug/Schwebeflug bzw. umgekehrt) wird automatisch auf das jeweils relevante Steuerungssystem umgeschaltet.

Beim Flugkörper nach Figur 2 ist ein anderes Steuerkonzept verwirklicht.

Im Heck des Kleinflugkörpers sitzt ein spezieller Elektro-Antriebsmotor 24 mit zwei gegenläufig drehenden Rotoren mit zwei gegenläufigen handelsüblichen Faltpropellern.

Der Elektromotor kann während des Fluges in seinen Drehrichtungen umgesteuert werden, so dass die Propeller in diesem Fall den Kleinflugkörper zunächst abbremsen und dann in einen Schwebeflugzustand bringen können, bei dem der Kleinflugkörper mit der Kamera nach unten "am Propeller hängt" und kontrollierte Seiten- und Höhenänderungen durchführen kann.

Der Elektromotor ist kardanisch im Heck des Flugkörpers gelagert, so dass er beliebig um zwei senkrecht aufeinanderstehende Querachsen des Flugkörpers geschwenkt werden kann. Damit kann eine sog. Schubvektorsteuerung des Flugkörpers realisiert werden.

Die Steuerung des Kleinflugkörper um die beiden Querachsen des Flugkörpers (Nick- und Gierachse) wird durch den kardanisch schwenkbaren Elektromotor mit den gegenläufigen Propellern bewirkt. Durch die gegenläufigen Propeller wird das durch den Elektromotor erzeugte resultierende Torque-Moment um die Flugkörperlängsachse theoretisch aufgehoben. Technisch wird jedoch durch Störungen immer ein minimales Torque-Moment resultieren. Um dieses Moment aussteuern zu können, sind ggf. relativ kleine Rollruder entsprechend den Entenrudern 2 bzw. dem Heckleitwerk 35 ausreichend, die entweder im Heck- oder im Bugbereich des Flugkörpers untergebracht werden können. Diese Rollruder werden von einer bzw. mehreren elektrischen Rudermaschinen angetrieben.

Die Ruder sind im Transportzustand im Startbehälter ebenso wie die Flügel angeklappt und werden etwa zeitgleich mit der Flügelentfaltung ausgeklappt.

Der Kleinflugkörper wird mittels Funkfernsteuerung vom Operateur (Soldat) gelenkt, wobei die automatische Lage- bzw. Drehratenstabilisierung des Kleinflugkörper durch 3-achsige Miniaturkreisel erfolgt. Dadurch wird die Lenkung und Steuerung des Kleinflugkörper stark vereinfacht.

Im Vorwärtsflug wird der Kleinflugkörper wie ein klassischer kartesischer Flugkörper durch Schwenken des Elektromotors gesteuert. Im Schwebeflug wird die Seitenbewegung ebenso durch Schwenken des Motors gesteuert, in beiden Flugzuständen wird die Rollage über die aerodynamischen Rollruder kontrolliert.

Die richtbare TV/IR-Kamera im Bug des Kleinflugkörper überträgt ihre Bilder über ein Datenlink zum Operateur (Soldaten), der den Kleinflugkörper anhand des Videos durch entsprechende Steuereingaben in die Fernsteuerung lenkt.

Der Kleinflugkörper kann für die Bekämpfung unterschiedlicher Ziele oder für unterschiedliche Missionen mit verschiedenen Wirksystemen bestückt werden. Neben den letalen Wirksystemen wie Spreng-/Splitterladungen und Mini-P-Ladungen können nichtletale Wirkmittel wie Blend-/Knallladungen oder Kampfgase etc. eingesetzt werden.

## Patentansprüche

1. Kleinflugkörper mit einem Rumpf (1), mit am Rumpf (1) klapp- oder faltbar angeordneten, der aerodynamischen Flugstabilisierung und zur Lagesteuerung dienender Flächen (2, 3, 23, 33, 35), denen jeweils eine separate Rudermaschine und Mittel zur Ansteuerung der Rudermaschinen zugeordnet sind, mit einem im Rumpf (1) angeordneten Propeller-Elektroantrieb (4, 24, 34), einer Energieversorgung, einer TV-Kamera (1, 21, 31), einer Datenübertragungs- und Lenkelektronik sowie mit einem Gefechtskopf oder einem Wirksystem, **dadurch gekennzeichnet, dass** die Drehrichtung des Propeller-Elektroantriebs (4, 24, 34) während des Fluges des Kleinflugkörpers zwecks Überführung des Kleinflugkörpers aus dem Vorwärtsflug in einen Schwebeflug umsteuerbar ist und dass der KleinFlugkörper im Vorwärtsflug über ein primäres System der Ruderwinkelzuordnung wie ein klassischer kartesischer Flugkörper steuerbar ist und dass im Schwebeflug die Seitenbewegung in x- und y-Richtung des flugkörperfesten Achsensystems über ein sekundäres System steuerbar ist, wobei die Umschaltung der Steuersysteme automatisch mit dem Übergang des Flugzustandes zwischen Vorwärts- und Schwebeflug erfolgt.

2. Kleinflugkörper nach Anspruch 1, **dadurch gekennzeichnet, dass** zu dessen Lenkung der den Propeller antreibende Elektroantrieb (24) samt Propellern (4, 24, 34) schwenkbar gelagert und mit zwei gegenläufigen Rotoren / Propellern und kleinen Aerodynamik-Rollrudern zur Rollsteuerung versehen ist.

3. Kleinflugkörper nach Anspruch 1, **dadurch gekennzeichnet, dass** der Elektromotor (24) im Heck des Kleinflugkörpers kardanisch gelagert ist und die Steuerung des Flugkörpers um die beiden Querachsen durch Schwenken des Elektromotors (24) samt Propellern (4, 24, 34) erfolgt, wobei das von den gegenläufigen Propellern erzeugte Torque-Moment durch die Rollruder (23) aussteuerbar ist.

4. Kleinflugkörper nach Anspruch 1, **dadurch gekennzeichnet, dass** dieser zur automatischen Lage- bzw. Drehlagenstabilisierung dreiachsige Miniaturkreisel aufweist.

## Claims

1. A small flying object with a fuselage (1), with surfaces (2, 3, 23, 33, 35) arranged in collapsible or foldable manner on the fuselage (1) and serving for aerodynamic flight stabilisation and position control, to each of which a separate control-surface servo unit and means for driving the control-surface servo units are assigned, with a propeller electric drive (4, 24, 34) arranged in the fuselage (1), with a power supply, with a TV camera (1, 21, 31), with data-transmission and guidance electronics, and also with a warhead or an active system, **characterised in that** the direction of rotation of the propeller electric drive (4, 24, 34) during the flight of the small flying object is reversible for the purpose of transferring the small flying object out of forward flight into hovering flight, and **in that** in forward flight the small flying object is capable of being controlled via a primary system of the control-surface-angle assignment like a conventional Cartesian flying object, and that in hovering flight the lateral motion in the x- and y-directions of the co-ordinate system that is fixed with respect to the flying object is capable of being controlled via a secondary system, the change-over of the control systems occurring automatically with the transition of the flight state between forward flight and hovering flight.

2. A small flying object according to Claim 1, **characterised in that** for its guidance the electric drive (24) driving the propeller, together with propellers (4, 24, 34), is supported so as to be capable of swivelling and is provided with two opposite-sense rotors/propellers and with small aerodynamic roll control surfaces for the purpose of roll control.

3. A small flying object according to Claim 1, **characterised in that** the electric motor (24) is supported on gimbals in the tail of the small flying object and the control of the flying object about the two transverse axes is effected by swivelling the electric motor (24) together with the propellers (4, 24, 34), the torque generated by the opposite-sense propellers being capable of being modulated by the roll control surfaces (23).

4. A small flying object according to Claim 1, **characterised in that** it exhibits triaxial miniature gyroscopes for the purpose of automatic position stabilisation or rotational-position stabilisation.

## Revendications

1. Drone avec un fuselage (1), avec des surfaces (2, 3, 23, 33, 35) pliables ou rabattables disposées sur le fuselage, servant à la stabilisation aérodynamique en vol et à l'orientation, à chacune desquelles est affectée une machine de gouverne séparée et un moyen de commande de la machine de gouverne, avec un moteur électronique à hélice (4, 24, 34) placé dans le fuselage (1), une alimentation en énergie, une caméra vidéo (1, 21, 31), une électronique de transfert de données et de pilotage ainsi qu'une tête de combat ou un système offensif, **caractérisé en ce que** le sens de rotation du moteur électronique à hélice (4, 24, 34) pendant le vol du drone, peut être inversé, de sorte que l'on puisse passer le drone d'un vol vers l'avant à un vol stationnaire et **en ce qu'**en vol vers l'avant, le drone peut être commandé comme un drone cartésien classique, à partir d'un système primaire de l'attribution d'angle des gouvernes et **en ce qu'**en vol stationnaire, le mouvement latéral dans le sens x et y du système axial fixé au drone peut être commandé par un système secondaire, où le changement des systèmes de commande se fait automatiquement lors de la commutation du drone entre un vol vers l'avant et un vol stationnaire.

2. Drone selon la revendication 1, **caractérisé en ce que** pour son pilotage, le moteur électronique (24), actionnant les hélices, avec les hélices (4, 24, 34) est pivotant et est équipé de deux rotors / hélices contraires et de petites gouvernes rotatives aérodynamiques, pour le guidage rotatif.

3. Drone selon la revendication 1, **caractérisé en ce que** le moteur électronique (24) est stocké à la cardan dans l'arrière train du drone et le guidage du drone autour des deux axes transversaux se fait en faisant pivoter le moteur électronique (24) et les hélices (4, 24, 34), où le couple torque généré par les hélices contraires peut être modulé par les gouvernes rotatives (23).

4. Drone selon la revendication 1, **caractérisé en ce que** ce dernier présente des gyroscopes miniatures à trois axes pour la stabilisation automatique de la position ou du pivotement.
